# EUROPÄISCHE PATENTSCHRIFT

(11) **EP 2 848 637 B1**
(45) Veröffentlichungstag und Bekanntmachung des Hinweises auf die Patenterteilung: **06.07.2016**
(21) Anmeldenummer: 14180635.6
(22) Anmeldetag: 12.08.2014
(51) Int. Cl.: C08G 18/48, C08G 18/75, C08G 18/08, C08G 18/10, C09D 175/04, C08G 18/42

(54) **WÄSSRIGE, HYDROXYLGRUPPENHALTIGE POLYURETHANDISPERSIONEN, EIN VERFAHREN ZU DEREN HERSTELLUNG UND DEREN VERWENDUNG IN BESCHICHTUNGSMITTELN**
AQUEOUS, HYDROXYL GROUP CONTAINING POLYURETHANE DISPERSIONS, A METHOD FOR THEIR PREPARATION AND THEIR USE IN COATING AGENTS
DISPERSIONS DE POLYURÉTHANE EN BASE AQUEUSE COMPRENANT DES GROUPES D'HYDROXYLE, SON PROCÉDÉ DE FABRICATION ET SON UTILISATION DANS DES PRODUITS DE REVÊTEMENT

(30) Priorität: 14.08.2013 DE 102013108828
(43) Veröffentlichungstag der Anmeldung: 18.03.2015
(73) Patentinhaber: SYNTHOPOL CHEMIE Dr. rer. pol. Koch GmbH & CO. KG, 21614 Buxtehude (DE)
(72) Erfinder: Spohnholz, Rüdiger, 22523 Hamburg (DE)
(74) Vertreter: Müller Schupfner & Partner Patent- und Rechtsanwaltspartnerschaft mbB

(56) Entgegenhaltungen:
- WO-A1-95/08583
- WO-A2-2012/115984
- DE-A1-102007 038 085
- US-A1- 2005 004 306

## Beschreibung

Die vorliegende Erfindung betrifft anionisch stabilisierte wässrige Dispersionen hydroxylgruppenhaltiger Polyurethane, ein Verfahren zu deren Herstellung und deren Verwendung in wässrigen Beschichtungsmitteln, wie wässrigen Einbrennlacken und Zweikomponentenlacken mit wasseremulgierbaren Polyisocyanaten.

Es ist bekannt, Polyurethandispersionen, die N-Methylpyrrolidon (NMP) oder ähnliche hochsiedende Verdünnungsmittel, wie zum Beispiel N-Ethylpyrrolidon (NEP), beinhalten, als Alternative zu konventionellen, ausschließlich organische Lösungsmittel enthaltenden Polyurethansystemen einzusetzen, die von einer lösungsmittelhaltigen Polyolkomponente auf Polyester- oder Acrylatbasis und einer lösungsmittelhaltigen Härterkomponente auf Basis eines Polyisocyanates abgeleitet sind.

Bei der Herstellung der wässrigen NMP- oder NEP-haltigen Polyurethandispersionen wird in einem ersten Schritt bei dem sogenannten Präpolymerverfahren unter Verwendung des Lösungsmittels NMP oder NEP als Zwischenprodukt ein isocyanatgruppen-haltiges, d.h. NCO-funktionelles Präpolymer hergestellt. Die Präpolymere sind erhältlich durch Umsetzung von Diolen mit Diisocyanaten und ggf. weiterhin Polyolen und/oder Isocyanaten mit mehr als zwei Isocyanatgruppen. Hierbei werden im sogenannten Hardsegment Urethangruppen erzeugt und im sogenannten Weichsegment bleiben die Polyolstrukturen und/oder Polyesterstrukturen erhalten. Aufgrund des Überschusses an Diisocyanat werden endständige NCO-Gruppen im Präpolymer erzeugt. Dieser Reaktionsschritt kann lösungsmittelfrei erfolgen, üblicherweise wird aber aufgrund der Viskosität des sich bildenden Präpolymers in Gegenwart von wasserverdünnbaren, aprotischen Lösungsmitteln wie NMP, NEP oder Glykolethern umgesetzt.

Anschließend erfolgt in variabler Reihenfolge die weitere Umsetzung des in NMP oder NEP gelösten Präpolymers sowie die Zugabe von wässriger Phase, wodurch sich eine wässrige, NMP-oder NEP haltige Dispersion ergibt. Das NMP, oder ggf. ein anderes eingesetztes Lösungsmittel verbleibt aufgrund seiner hohen Siedetemperatur in der fertigen Dispersion.

Auf diese Weise können hochmolekulare, ggf. verzweigte, Polyurethane mit endständigen Hydroxylgruppen erzeugt werden, die infolge der Verdünnung mit NMP stabile wässrige Dispersionen bilden. Infolge eines hohen Anteils an Lösungsmitteln wie NMP mit bis zu 15%, bezogen auf die fertige Dispersion, sind auf diese Weise feinteilige Polyurethandispersionen mit einer mittleren Teilchengröße von 10 bis 70 nm herstellbar. Solche Dispersionen besitzen in Bezug auf die Reaktivität mit wasserverdünnbaren Polyisocyanaten in der Lackformulierung und in Bezug auf die Feinteiligkeit Eigenschaften in Nass- und Trockentransparenz sowie Chemikalienbeständigkeit, Haptik und Topfzeit, die mit herkömmlichen, lösungsmittelhaltigen Zweikomponentensystemen vergleichbar sind.

Die EP 1609808 A2 offenbart eine Zwei-Komponenten-Beschichtungszusammensetzung, die als erste Komponente (i) eine wässrige NMP-haltige Polyurethandispersion in Form eines isocyanat-funktionellen Präpolymers enthält, das ferner säurefunktionelle Gruppen umfasst, wobei das Präpolymer durch Umsetzen von Polyolen mit Carboxylfunktionalität mit einem Diisocyanat hergestellt worden ist und die Polyole ein Molekulargewicht (Mn) von 100 bis 10000, eine Säurezahl von 25 bis 500 mg KOH/g und eine Hydroxylzahl von 25 bis 500 mg KOH/g aufweisen. Die zweite Komponente (ii) enthält ein Vernetzungsmittel für das Polyurethan, das keine freien Isocyanatgruppen enthält. Bei der Herstellung des Präpolymers im ersten Schritt wird als Lösungsmittel NMP eingesetzt.

Die DE 19847791 A1 betrifft wässrige Polyurethandispersionen enthaltend ein Polyurethan, das aus (a) wenigstens einem Polyol mit einem als Zahlenmittel bestimmten mittleren Molekulargewicht von 500 bis 6000 g/mol, vorzugsweise 1000 bis 4000, insbesondere 1500 bis 3000 g/mol, (b) wenigstens einem Polyol, vorzugsweise Diol, mit einem Molgewicht von kleiner 500 g/mol, vorzugsweise von 61 bis 499 g/mol, (c) wenigstens einem aliphatischen Polyisocyanat, vorzugsweise Diisocyanat, (d) wenigstens einem Diol mit einem Molekulargewicht von kleiner als 450 g/mol, das eine oder mehrere ionische Gruppen und/oder eine oder mehrere potentiell ionische Gruppen trägt, vorzugsweise wenigstens eine Carboxyl- oder Carboxylatgruppe trägt, (e) wenigstens einem gegenüber NCO-Gruppen reaktiven Amin, das Hydroxylgruppen trägt und eine OH-Funktionalität von 1 bis 6 besitzt, (f) Wasser und gegebenenfalls (g) einem Monoalkohol aufgebaut ist.

Die Dispersionen sind dadurch gekennzeichnet, dass das Molverhältnis von Polyol der Komponente (a) zur Summe der Polyole (b) und (d) 1 : 1,5 bis 1 : 4, vorzugsweise 1 : 2 bis 1 : 3 beträgt, das Molverhältnis der Summe der Polyole (a), (b) und (d) zum Polyisocyanat (c) 1 : 1,1 bis 1 : 2,5, vorzugsweise 1 : 1,2 bis 1 : 1,7 beträgt, wobei die OH-Funktionalität des Polyurethans 2 bis 6, vorzugsweise 2 bis 4 beträgt, und das als Zahlenmittel bestimmte mittlere Molekulargewicht des Polyurethans weniger als 15000, vorzugsweise von 2500 bis 10000, insbesondere von 3000 bis 7000 g/mol beträgt. Bei der Herstellung des Präpolymers wird NMP als Lösungsmittel eingesetzt.

Aufgrund aktueller toxikologischer Befunde zum Lösungsmittel NMP und NEP und der damit verbundenen Einstufung und Kennzeichnung von NMP-haltigen Polyurethandispersionen und der daraus hergestellten Lacke sind diese Produkte mehr und mehr vom Markt verschwunden bzw. besteht die Aufgabe, diese durch zumindest NMP-freie, besser auch NEP-freie, noch besser lösungsmittelfreie Polyurethandispersionen mit ähnlichen, möglichst vergleichbaren Eigenschaften zu ersetzen.

Für viele Anwendungsgebiete von wässrigen Zweikomponenten-Beschichtungen für Holz-, Metall- oder Kunststoffuntergründen in Kombination mit wasseremulgierbaren Polyisocyanaten als auch von Einbrennsystemen in Kombination mit wasserverdünnbaren Melaminharzen oder blockierten Polyisocyanaten besteht der Wunsch, bei dieser toxikologisch erforderlichen Produktumstellung auf eine hydroxylgruppenhaltige Polyurethandispersion umzustellen, die nicht nur frei von NMP ist, sondern gänzlich frei von hochsiedenden und damit nicht aus der wässrigen Phase abdestillierbaren Lösungsmitteln ist, d.h. frei von Lösungsmitteln, die bei Normaldruck einen Siedepunkt von mehr als 100 °C aufweisen, wie zum Beispiel N-Ethylpyrrolidon oder Dipropylenglykolmonomethylether. Werden Dispersionen, die hochsiedende und somit nicht abdestillierbare Lösungsmittel enthalten, zu Beschichtungen verarbeitet, so können die dabei frei werdenden Lösungsmittel eine umweltschädliche Wirkung entfalten, und zum Beispiel zum Abbau der Ozonschicht bzw. zur Bildung von saurem Regen beitragen. Solche Dispersionen sind nicht nur ökologisch, sondern auch ökonomisch nachteilig, weil das bei deren Herstellung eingesetzte Lösungsmittel mangels Abdestillierbarkeit nicht wiederverwertet werden kann.

In neueren Verfahren zur Herstellung von wässrigen Polyurethandispersionen erfolgte daher eine Umstellung auf ein anderes Herstellungsverfahren, den in der Literatur bekannten, sogenannten Acetonprozess. Bei diesem Prozess wird bei der Herstellung des Präpolymers zur Viskositätsreduzierung anstelle von NMP ein mit Wasser mischbares, aber niedrigsiedendes, d.h. unterhalb von 100 °C siedendes Lösungsmittel wie zum Beispiel Aceton, Methylethylketon oder Tetrahydrofuran intermediär eingesetzt. Das bei der Präpolymerherstellung aufgrund der auftretenden Viskositäten notwendige Lösungsmittel ist mit Wasser verdünnbar und weist einen Siedepunkt unter 100°C auf und wird nach Fertigstellung der wässrigen Dispersion in einem nachgeschalteten Destillationsschritt azeotrop wieder weitgehend entfernt (max. Restgehalt in Lieferform < 1 Gew.% Lösungsmittel, üblicherweise < 0,5 Gew.%). Als Lösungsmittel sind alle wasserverdünnbaren, unter 100°C siedenden Lösungsmittel prinzipiell einsetzbar, industrielle Verwendung finden bisher nach vorliegendem Kenntnisstand nur Aceton und Methylethylketon. Das Lösungsmittel wird nach der Herstellung der fertigen wässrigen Polyurethandispersion aus der wässrigen Phase mittels Vakuumdestillation azeotrop wieder weitgehend abdestilliert, sodass Restlösungsmittelgehalte von weit unter 1 Gew.-% in der fertigen Dispersion verbleiben.

Die DE 102005056434 A1 betrifft wässrige Urethangruppen enthaltende, hydroxylfunktionelle Polyester-Dispersionen, ein Verfahren zu deren Herstellung sowie deren Verwendung in Kombination mit Vernetzerharzen zur Herstellung von Lacken, Beschichtungen und Klebstoffen. Die Dispersionen sind abgeleitet aus (a) 87,0 bis 95 Gew.-% mindestens eines hydroxylfunktionellen Polyesters mit einer mittleren Funktionalität von größer 2, (b) 1 bis 2,4 Gew.-% mindestens einer Diund/oder Tri- und/oder Monohydroxylcarbonsäure und/oder Hydroxylsulfonsäure und/oder Aminosulfonsäure und/oder Aminocarbonsäure, (c) 4 bis 10,6 Gew.-% mindestens einer, mindestens difunktionellen Polyisocyanatkomponente und (d) 0 bis 3 Gew.-% sonstiger Komponenten, wobei sich die Prozentangaben (a) bis (d) zu 100% ergänzen, und die zur Stabilisierung der Dispersion über die Komponente (b) eingebauten Säuregruppen zu 50 bis 150 % als Salzgruppen vorliegen. Die Dispersionen werden vorzugsweise durch ein Verfahren hergestellt, bei dem in einem ersten Schritt ein NCO-funktionelles Zwischenprodukt bei 40 bis 140 °C in Anwesenheit von 5 bis 50 Gew.-% organischen Lösemitteln wie zum Beispiel Aceton und von nicht NCO-reaktiven Neutralisationsmitteln durch Umsetzung der Komponenten (b), (c) und (d) mit einer solchen Menge der Komponente (a) hergestellt wird, dass ein NCO:OH(NH)-Verhältnis von größer 1,4:1 resultiert und in einem zweiten Schritt die restliche Menge der Komponente (a) und gegebenenfalls weitere Lösungsmittel und/oder Neutralisationsmittel zugegeben und solange umgesetzt werden, bis der NCO-Gehalt 0 % erreicht hat und anschließend gegebenenfalls Neutralisationsmittel und gegebenenfalls weitere organische Lösungsmittel und/oder Hilfsmittel zugesetzt werden und Wasser zur Polymerlösung oder die Polymerlösung zu Wasser gegeben wird.

Die WO 03/016375 offenbart eine silylfreie wässrige Polyurethandispersion, die vom Reaktionsprodukt eines hydroxylierten Polybutadienharzes, eines Dimethylolpropionsäuresalzes und eines aliphatischen Diisocyanats abgeleitet ist, wobei das Reaktionsprodukt in Wasser dispergiert worden ist und mit einem Diamin kettenverlängert worden ist. Die Polyurethandispersion wird dadurch hergestellt, dass (a) das hydroxylierte Polybutadienharz, das Dimethylolpropionsäuresalz und das aliphatische Diisocyanat vorzugsweise in Gegenwart von Methylethylketon oder Tetrahydrofuran zu einem Reaktionsprodukt umgesetzt werden, (b) das Reaktionsprodukt in Wasser dispergiert wird und (c) das Reaktionsprodukt mit einem Diamin kettenverlängert wird.

Die DE 69412289 T2 betrifft eine stabile wässrige anionische Polyurethanpolymer-Dispersion, wobei das Polyurethanpolymer das Reaktionsprodukt in wässriger Dispersion eines isocyanat-endständigen Polyurethan-Präpolymers und wenigstens einer eine Aminfunktionalität aufweisenden kettenverlängernden Verbindung umfasst, wobei das isocyanat-endständige Polyurethan-Präpolymer das Reaktionsprodukt einer Polyisocyanatkomponente, die wenigstens 50 Gew.-% 1,6-Hexamethylendiisocyanat aufweist, mit einer Polyolkomponente umfasst, wobei die Polyolkomponente Carboxylat- und Sulfonatgruppen aufweist, umfassend wenigstens ein sulfoniertes Polyesterpolyol und Dimethylolpropionsäure, wobei die Carboxylat- und Sulfonatgruppen des Isocyanat-Präpolymers vorher oder gleichzeitig bei der Reaktion des Präpolymers und des Aminfunktionalität aufweisenden Kettenverlängerers mit tertiärem Amin neutralisiert werden. Die entsprechenden Produkte sind im Unterschied zur vorliegenden Erfindung für oberflächenklebrige Filme vorgesehen bzw. weisen niedrige Pendelhärten auf.

Die DE 102006017385 A1 offenbart wässrige Polyurethandispersionen (I) enthaltend als Aufbaukomponenten (a) Polyisocyanate, (b) Polyole mit mittleren Molgewichten Mn von 500 bis 6000 g/mol, (c) Polyole mit mittleren Molgewichten Mn von 62 bis 500 g/mol, (d) Verbindungen, die eine ionische Gruppe oder eine zur Ausbildung einer ionischen Gruppe befähigte Gruppe enthalten, (e) Polyamine mit mittleren Molekulargewichten Mn unter 500 g/mol, ausgenommen Hydrazin, sowie (f) Monoalkohole mit mittleren Molgewichten Mn von 32 bis 145 g/mol und/oder (g) Monoamine mit mittleren Molgewichten Mn von kleiner 147 g/mol, wobei der Anteil an (f) und/oder (g) mindestens 0,4 bis 1,26 Gew.-% und der Anteil der Komponente (c) größer 5,5 Gew.-% beträgt und der Hartsegmentanteil der PolyurethanDispersion zwischen 55 bis 85 Gew.-% liegt. Ferner ist ein Verfahren zur Herstellung der Polyurethandispersionen offenbart, das dadurch gekennzeichnet ist, dass (I) eine Polyurethandispersion ohne Zusatz von Hydrazin hergestellt wird, wobei (I.1) zunächst in einem ersten Schritt eine NCO-Präpolymer-Lösung in einer Konzentration von 66 bis 98% eines bei Normaldruck einen Siedepunkt unterhalb 100 °C aufweisenden Lösemittels durch Umsetzung der Komponenten (a), (b), (c) und (d) erhalten wird, (I.2) in einem zweiten Schritt das NCO-Präpolymer (I.1) in Wasser dispergiert wird, wobei vor, während oder nach der Dispergierung eine zumindest teilweise Neutralisation der ionischen Gruppen erfolgt, (I.3) in einem dritten Schritt eine Kettenverlängerung mit der Komponente (e) erfolgt und (I.4) in einem vierten Schritt das Lösungsmittel destillativ entfernt wird, mit der Maßgabe, dass die Komponente (f) in Schritt (I.1) oder die Komponente (g) in Schritt (I.3) eingesetzt wird. Die Produkte weisen keinen Kern-Schale-Aufbau auf und haben daher andere Eigenschaften. Auch hier sind die entsprechenden Produkte im Unterschied zur vorliegenden Erfindung für oberflächenklebrige Filme vorgesehen bzw. weisen niedrige Pendelhärten auf.

Die DE 102007038085 A1 betrifft ein Verfahren zur Herstellung von harten, strahlungshärtbaren, Beschichtungssystemen auf Basis von wässrigen Polyurethandispersionen (I) durch Polyaddition von (A) 40 bis 80 Gew.-% einer hydroxylhaltigen Komponente enthaltend (A1) 10 bis 80 Gew.-%, bezogen auf die Summe der Komponenten (A) bis (F) eines oder mehrerer hydroxylgruppenhaltiger Präpolymere, die ausgewählt sind aus der Gruppe von Polyester, Polyether, Polyepoxy(meth)acrylate und Polyurethane mit einer OH-Zahl im Bereich von 40 bis 300 mg KOH/g und Gruppen enthalten, die unter Einwirkung energiereicher Strahlung mit ethylenisch ungesättigten Doppelbindungen unter Polymerisation reagieren, und gegebenenfalls (A2) 0 bis 50 Gew.-% bezogen auf die Summe der Komponenten (A) bis (F) eines oder mehrerer (Meth)acrylatgruppenhaltiger Alkohole mit einer OH-Zahl im Bereich von 35 bis 1000 mg KOH/g, (B) 0,1 bis 20 Gew.-% einer oder mehrerer gegenüber Isocyanatgruppen reaktiven Verbindungen, die für die Polyurethandispersion dispergierend wirkt, (C) 0 bis 30 Gew.-% hydroxylfunktionelle Verbindungen ausgewählt aus der Gruppe von Diolen, Triolen jeweils mit einem Molekulargewicht im Bereich von 62 bis 242 g/mol, Polyester, Polycarbonaten, Polyurethanen, C2-, C3-, und/oder C4-Polyethern, Polyetherestern und Polycarbonatpolyestern jeweils mit einem Molekulargewicht im Bereich von 700 bis 4000 g/Mol mit (II) anschließendem Umsatz mit (D) 10 bis 50 Gew.-% eines oder mehrerer Polyisocyanaten zu einem Polyurethan und danach (III) Zusatz von (E) 2 bis 40 Gew.-% Oligo(meth)acrylate, die ausgewählt sind aus der Gruppe der Komponente (A1) mit einer Doppelbindungsdichte von größer 2,0 mol Doppelbindungen/kg Substanz und durch Einwirkung energiereicher Strahlung mit ethylenisch ungesättigten Verbindungen unter Polymerisation reagieren, (IV) anschließende Dispergierung des nach Schritt (E) erhaltenen Produktes in Wasser zu einer wässrigen Polyurethandispersion und (V) Umsetzung der aus Schritt (IV) erhaltenen wässrigen Polyurethandispersion mit (F) 0,1 bis 10 Gew.-%, eines oder mehrerer Mono-, Di-, oder Polyamine und/oder Aminoalkohole, wobei sich die Anteile der Komponenten (A) bis (F) zu 100 Gew.-% addieren und die Beschichtungssysteme nach Härtung eine Pendelhärte nach König nach DIN 53157 von größer 60 sec bei einem 150 µm dicken Nassfilmstärkeauftrag und nach EN ISO 527 eine Bruchdehnung von kleiner 150% bei einem 250 µm dicken Nassfilmstärkeauftrag aufweisen. Vorzugsweise wird bei der Herstellung der Dispersionen das Acetonverfahren eingesetzt. Es werden feinteilige Polyurethandispersionen erhalten.

Die DE 102007038085 A1 betrifft harte Beschichtungen aus Polyurethan, die bei der Applikation einer Strahlenhärtung ausgesetzt werden müssen. Die Polyurethan-Systeme der vorliegenden Erfindung härten durch Trocknung physikalisch oder chemisch aus.

Die US 5959003 A und US 2005/0004306 A1 offenbaren Polyurethanpolymere die aus separat vorliegenden Präpolymeren unterschiedlicher Hydrophilie durch Vernetzung mit Diaminen hergestellt werden.

Die aus dem Stand der Technik bekannten, mittels des Acetonprozesses hergestellten wässrigen Urethangruppen enthaltenden hydroxylfunktionellen Polyester-Dispersionen besitzen somit in Bezug auf die Reaktivität mit dem wasserverdünnbaren Polyisocyanat und in Bezug auf die Feinteiligkeit jedoch Eigenschaften in Nass- und Trockentransparenz sowie Chemikalienbeständigkeit, Haptik und Topfzeit, die jenen von herkömmlichen Systemen, die hochsiedende Lösungsmittel enthalten, unterlegen sind. Nass- und Trockentransparenz wird durch einen Rakelaufzug eines beispielsweise 90 µm Filmes in Lieferform visuell sofort und nach ausreichender Trocknung von 24 Std. bestimmt. Die Topfzeit, d.h. der Zeitraum, in der sich die chemischen Beständigkeiten aufgezogener Zweikomponenten-Filme nicht verschlechtern, liegt bei 4 h meist bis zu 8 h.

Die EP 2110396 A1 betrifft Polyurethansysteme, die mindestens (A) wasserlösliche harnstoffgruppenhaltige, hydroxylfunktionelle Polyurethane mit Hydroxylgruppengehalten von 2 bis 10 Gew.-% und Gehalten an Harnstoffgruppen (berechnet als -NH-CO-NH-) enthalten, die von Aminoalkoholen mit einer primären oder sekundären Aminogruppe und mindestens einer Hydroxylgruppe abgeleitet sind, von 3 bis 20 Gew. -%, jeweils bezogen auf das harnstoffgruppenhaltige, hydroxylfunktionelle Polyurethan oder deren wässrigen Lösungen, sowie (B) Vemetzer, welche keine freien Isocyanatgruppen enthalten und gegebenenfalls hydrophiliert sind und (C) ggf. weitere wässrig gelöste bzw. dispergierte bzw. organisch gelöste, ggf. hydroxylfunktionelle Oligomere bzw. Polymere. Die Polyurethane (A) sind erhältlich durch Herstellung NCO-funktioneller Präpolymere durch ein- oder mehrstufige Umsetzung von (a) mindestens einem hydroxyl- und/oder aminofunktionellen Hydrophilierungsmittel mit mindestens einer Säuregruppe bzw. dem Salz einer Säuregruppe oder mindestens einer tertiären Aminogruppe bzw. dem Salz einer tertiären Aminogruppe mit (b) mindestens einem Polyol, (c) mindestens einem Polyisocyanat und (d) ggf. sonstigen von den Verbindungen der Komponenten a), b) und c) verschiedenen hydroxyl- und/oder aminofunktionellen Verbindungen und deren Reaktion (e) mit einer Aminoalkohol-Komponente, aus Aminoalkoholen mit einer primären oder sekundären Aminogruppe und mindestens einer Hydroxylgruppe, wobei der Anteil an Aminoalkoholen mit einer sekundären Aminogruppe, bezogen auf die Gesamtmenge der Komponente e), mindestens 60 Gew.-% beträgt. Die aus den Verbindungen der Komponente a) herrührenden Säuregruppen oder tertiären Aminogruppen können im Polyurethan durch ganze oder teilweise Neutralisation in ihrer Salzform vorliegen.

Alternativ kann das Polyurethan (f) in Wasser dispergiert oder gelöst werden, wobei vor oder während der Dispergierung bzw. des Lösungsvorgangs in Wasser die Säure- oder tertiären Aminogruppen der Hydrophilierungsmittel (a) mit einem Neutralisationsmittel umgesetzt werden. Nachteil der in EP 2110396 hergestellten Polyurethandispersionen sind der Einsatz von Triethylamin, das aufgrund neuerer toxikologischer Studien zumindest im Bereich der Automobilindustrie ein nicht gewünschter Rohstoff ist. Ebenso ist die deutlich höhere Viskosität der fertigen Dispersionen, welche weniger "Spielraum" bei der Lackherstellung bzw. eine aufwendigere Handhabung beim Pumpen oder Dosieren nach sich ziehen, ein Nachteil. Weiterhin ist ein höherer Bedarf an Aceton oder anderer geeigneter Lösungsmittel erforderlich. U.a. unterscheiden sich die erfindungsgemäß hergestellten Polyurethandispersionen dadurch, dass ein 90 µm Filmaufzug auf Glas der fertigen Dispersion bereits ohne Zusatz von anderen Stoffen einen klebfreien Film gemäß einer Pendeldämpfung nach König (gemäß DIN 53157) besitzt.

Es ist deshalb die der Erfindung zugrundeliegende Aufgabe, ein wässriges, anionisch stabilisiertes und hydroxylgruppenhaltiges Bindemittel auf Polyurethanbasis zur Verfügung zu stellen, das für wässrige Ein- und Zwei-Komponenten-Beschichtungsmittel, wie zum Beispiel wässrige Einbrennlacke oder wässriger Polyurethan-Polyisocyanat-Beschichtungen geeignet ist und auf den Einsatz hochsiedender Lösungsmittel wie insbesondere NMP und NEP verzichtet.

Diese Aufgabe wird durch das Verfahren zur Herstellung einer wässrigen, anionisch stabilisierten, hydroxylgruppenhaltigen Polyurethandispersion gemäß Anspruch 1 gelöst. Vorteilhafte Ausgestaltungen sind Gegenstand der Unteransprüche oder nachfolgend beschrieben.

Das Verfahren zeichnet sich dadurch aus, dass ähnlich der bekannten Kern-Schale-Technologie bei der wässrigen Emulsionspolymerisation von Acrylmonomeren zur Herstellung von ebenfalls anionisch stabilisierten Reinacrylat- und Styrolacrylatdispersionen eine gezielte, sukzessive Umsetzung der erforderlichen Polyolkomponenten Alkohol A, Alkohol B und Alkohol C mit Polyisocyanat oder Polyisocyanat-Gemischen erfolgt. Beim erfindungsgemäßen Verfahren kann zusätzlich, insbesondere aufgrund der Carboxyl- und/oder Sulfonsäuregruppen in dem Alkohol B, im Unterschied z.B. zur Emulsionspolymerisation, auf den Einsatz von externen Emulgatoren verzichtet werden.

Das Verfahren hat ferner den Vorteil, dass bei der Herstellung des Präpolymers keine toxikologisch bedenklichen, hochsiedenden Lösungsmittel wie zum Beispiel N-Ethylpyrrolidon und N-Methylpyrrolidon oder andere geeignete Lösungsmittel wie Dipropylenglykolmonomethylether eingesetzt werden bzw. eingesetzt werden müssen.

Gegebenenfalls können bei der Herstellung des Präpolymers mit Disocyanat geringe Mengen an niedrigsiedenden Lösungsmitteln wie zum Beispiel Aceton oder Methylethylketon eingesetzt werden. Unter niedrigsiedenden Lösungsmitteln sind erfindungsgemäß solche gemeint, die bei Normaldruck (1013 mbar) einen Siedepunkt von weniger als 100 °C aufweisen. Im Unterschied hierzu werden vorliegend Lösungsmittel als hochsiedend bezeichnet, wenn sie bei Normaldruck einen Siedepunkt von größer 100 °C aufweisen.

Setzt man dagegen die Polyolkomponenten Alkohole A und B und ggf. C gemeinsam von Beginn an in einem Einstufenprozess mit monomeren Diisocyanaten im gewünschten Diisocyanat/Polyolverhältnis (NCO/OH+NH) um, so bildet sich ein Präpolymer, welches unter Einsatz von maximal 50 Gew.-%, bezogen auf die Rohstoffeinwaage der Polyole und Isocyanate, an organischen Lösungsmitteln wie Aceton oder Methylethylketon nicht mehr bei den üblichen Reaktionstemperaturen der Polyadditionsreaktion zwischen 30 und 90 °C rührfähig ist.

Möglich ist auch, dass das Präpolymer bei der genannten Menge an Lösungsmittel zwar wie geplant hergestellt werden kann, die Dispergierung des Polyurethans jedoch zu einer Dispersion führt, welche derart hochviskos ist, dass sie nicht mehr gerührt und folglich nicht weiter verarbeitet werden kann. Ein Einsatz von größeren Mengen an (niedrigsiedenden) Lösungsmitteln ist grundsätzlich möglich, aber aus ökonomischen und ökologischen Gründen unerwünscht. Zwar kann das Lösungsmittel abdestilliert werden, die azeotrope Destillation des Keton/Wasser-Gemisches ist jedoch langwierig und es fällt kein für die Wiederverwendung für die Polyurethansynthese geeignetes wasserfreies Destillat an.

Die niedrigsiedenden Lösungsmittel sind, falls im erfindungsgemäßen Verfahren eingesetzt, gegenüber den hochsiedenden ökonomisch vorteilhaft, weil sie nach der Herstellung der wässrigen Polyurethandispersion abdestilliert werden können und somit wiederverwertet werden können. Auch wenn bei der Herstellung des Präpolymers Lösungsmittel eingesetzt wird, ermöglicht somit das Verfahren die Herstellung von lösungsmittelarmen oder sogar lösungsmittelfreien Polyurethandispersionen. Solche Dispersionen sind ökologisch vorteilhaft, da sie bei der Weiterverarbeitung zu Beschichtungen keine Lösungsmittel freisetzen, die eine umweltschädliche Wirkung entfalten könnten.

Außerdem bringt das erfindungsgemäße Verfahren vorteilhafte Polyurethandispersionen hervor, deren Polyurethane durch den sequentiellen Aufbau in der Polyaddition der Einzelkomponenten zum gewünschten Polyurethan gekennzeichnet sind.

Die vorliegende Erfindung betrifft weiterhin eine wässrige, anionisch stabilisierte, hydroxylgruppenhaltige Polyurethandispersion, die nach dem erfindungsgemäßen Verfahren erhältlich ist.

Überraschenderweise handelt es sich bei den erfindungsgemäßen Polyurethandispersionen um besonders feinteilige Dispersionen. Erfindungsgemäß sind mit "feinteiligen" Dispersionen solche Dispersionen gemeint, deren Teilchen eine mittlere Größe, d.h. einen mittleren Durchmesser, von 10 bis 70 nm aufweisen. Die Durchmesser wurden mittels dynamischer Lichtstreuung mit dem Malvern Zetasizer 2000 bestimmt. Ebenso überraschend ist ferner, dass die erfindungsgemäßen Polyurethandispersionen hinsichtlich der Reaktivität im Einkomponenten-Einbrennlacksystem (mit wasserverdünnbaren Melaminharzen oder blockierten Polyisocyanaten) bzw. Zweikomponenten-System (mit wasserverdünnbaren Polyisocyanaten) und der damit verbundenen Chemikalienbeständigkeit und Oberflächenhärte besonders geeignete hydroxylgruppenhaltige Polyurethan-Dispersionen darstellen.

Die aus den erfindungsgemäßen, besonders feinteiligen Polyurethandispersionen hergestellten Klarlacke (90 µm Rakelaufzug auf Glas, 24 h im Klimaraum bei 90°C und 80 % Luftfeuchte getrocknet) weisen bereits als luftgetrocknete 1-Komponenten-Filme Pendeldämpfungen (Oberflächenhärte gemäß König nach DIN 53157 bestimmt mit einem Pendeldämpfungsgerät der Firma Byk) von größer 50 s auf.

Als 2-Komponentenfilme (in Kombination mit in Wasser emulgierbaren Polyisocyanaten oder als Einbrennlacke in Kombination mit wasserverdünnbaren Melaminharzen oder wasserverdünnbaren Polyisocyanaten) sind die Pendelhärten gemäß obiger Probenvorbereitung größer 100 s und stellen damit jeweils besonders kratzfeste und oberflächenharte Beschichtungen dar, wie es beispielsweise in der Holz- und Kunststoffbeschichtung in vielen Fällen gefordert wird. Die Polyurethan-Dispersionen weisen nach Kern-Schale-Prinzip eingebaute Urethangruppen auf und besitzen überraschenderweise eine gute Haptik bei gleichzeitiger überdurchschnittlicher Chemikalienbeständigkeit.

Die erfindungsgemäßen Polyurethandispersionen sind somit frei von hochsiedenden Lösungsmitteln, und besitzen trotzdem in der eben beschriebenen Anwendung vergleichbare Eigenschaften wie bisher eingesetzte lösungsmittelhaltige, meist NMP-haltige Polyurethandispersionen.

Die Erfindung betrifft ferner die Verwendung einer solchen Polyurethandispersion in wässrigen Beschichtungsmitteln, insbesondere in wässrigen ZweiKomponenten-Beschichtungsmitteln oder wässrigen 1-Komponenten-Beschichtungsmitteln, wie zum Beispiel wässrigen Einbrennlacken und - beschichtungen.

Bevorzugte Ausführungsformen der Erfindung befinden sich in den Unteransprüchen.

Die erfindungsgemäßen Polyurethandispersionen sind in wässrigen Beschichtungsmitteln, insbesondere in wässrigen Zwei-Komponenten-Beschichtungsmitteln oder wässrigen 1-Komponenten-Beschichtungsmitteln einsetzbar. Typische Zwei-Komponenten-Beschichtungsmittel, z.B. lufttrocknend oder forciert trocknend, enthalten neben den erfindungsgemäßen Polyurethandispersionen wasseremulgierbare Polyisocyanate auf Basis von HDI (Hexamethylendiisocyanat) und/oder IPDI (Isophorondiisocyanat). Daneben können noch typische Verlaufs- und Netzmittel eingesetzt werden. Typische EinKomponenten-Beschichtungsmittel enthalten neben den erfindungsgemäßen Polyurethandispersionen wasseremulgierbare Melaminharze oder wasseremulgierbare blockierte Polyisocyanate auf Basis von HDI und/oder IPDI, wie zum Beispiel für wässrige Einbrennlacke und -beschichtungen.

Typische Gruppen zum Erhalt blockierter Polyisocyanate sind epsilon-Caprolactam, Malonester und Butanonoxim. Die Ein-Komponenten-Beschichtungsmittel werden als Einbrennlacke eingesetzt bei Temperaturen oberhalb von 120°C.

Der Alkohol A ist vorzugsweise im Wesentlichen frei von Carboxyl- und/oder Sulfonsäuregruppen (zusammen < 3 mol.%, insbesondere < 1 mol.% oder sogar ungefähr 0 mol.% der Alkohol A). Unabhängig hiervon ist Alkohol A im Mittel vorzugsweise 1,9 bis 3 wertig. Vorzugsweise werden zwei- oder dreiwertige Alkohole oder deren Mischungen eingesetzt und weiter bevorzugt sind 90 mol% aller Alkohole A zweiwertig.

Der Alkohol A kann durch Homo- oder Co-polymerisation von Ethylenoxid, Propylenoxid, Butylenoxid, Tetrahydrofuran, Styroloxid oder Epichlorhydrin oder durch Anlagerung mindestens einer dieser Verbindungen, gegebenenfalls im Gemisch oder nacheinander, an Startkomponenten mit reaktionsfähigen Wasserstoffatomen erhältlich sein. Typische Startverbindungen sind kurzkettige Diole mit 2 bis 6 Kohlenstoffatomen.

Weiterhin sind Polyesterpolyole als Alkohol A geeignet. Das Polyesterpolyol ist durch Umsetzung von zweiwertigem Alkohol mit zweiwertiger aliphatischer, cycloaliphatischer, arylaliphatischer oder aromatischer Carbonsäure und/oder dem entsprechenden Carbonsäureanhydrid erhältlich, wobei der mehrwertige Alkohol vorzugsweise Ethylenglykol, Propan-1,2-diol, Propan-1,3-diol, Butan-1,4-diol, 1,6-Hexandiol, Neopentylglykol, Trimethylolpropandiol, 1,4-Cyclohexyldimethanol, 2-Methylpropan-1,3-diol, ein Methylpentandiol, Diethylenglykol, Triethylenglykol, Polyethylenglykol, Polypropylenglykol, Dipropylenglykol, Dibutylenglykol oder eine Mischung davon ist, und die Carbonsäure oder das Carbonsäureanhydrid vorzugsweise Phthalsäure, Pthalsäureanhydrid, Isopthalsäure, Tetra- oder Hexahydrophthalsäureanhydrid, Cyclohexyldicarbonsäure, Maleinsäure, Maleinsäureanhydrid, Fumarsäure, dimere Fettsäure, aliphatische, lineare Dicarbonsäure mit einer Kohlenstoffanzahl von 2 bis 20 oder eine Mischung davon ist. Eine weitere Alternative für den Alkohol A ist ein Polyacrylatpolyol. Dieser kann ein Acrylatharz sein, das durch Einbau von hydroxylfunktionellem Acrylatmonomer, wie zum Beispiel Hydroxylethylacrylat und/oder Hydroxylmethylacrylat erhältlich ist, und eine Hydroxylzahl von 20 bis 250 besitzt.

Nach einer weiteren Alternative ist der Alkohol A ein Polycaprolactondiol, wobei das Polycaprolactondiol z.B. aus ε-Caprolacton, β-Propiolacton, γ-Butyrolacton und/oder Methyl-E-caprolacton oder einer Mischung davon erhältlich ist.

Werden Alkohole A mit einem Tg von kleiner minus 20°C eingesetzt werden Polyurethandispersion zur Verwendung als klebrige Beschichtungsmassen und darüber zur Verwendung nicht-klebrige Beschichtungsmasen erhalten.

Darüber hinaus ist es auch möglich, Mischungen der oben genannten Alkohole A einzusetzen.

Der Alkohol B ist eine Verbindung, die mindestens zwei Hydroxyl- und eine Carboxylgruppe enthält, und vorzugsweise Dimethylolpropionsäure oder Dimethylolbutansäure, insbesondere Dimethylolpropionsäure ist.

Der Alkohol C ist ein Alkohol, der mindestens 2 primäre oder sekundäre Hydroxylgruppen enthält, wobei vorzugsweise mindestens 30%, vorzugsweise mindestens 50%, besonders bevorzugt mindestens 80%, der Alkohole C pro Molekül 3 und mehr Hydroxylgruppen aufweisen, insbesondere Glycerin, Pentaerythrit, Trimethylolpropan und/oder (partiell) alkoxylierte, insbesondere (partiell) ethoxylierte Polyalkohole mit mindestens zwei Hydroxylgruppen.

Die Alkohole A und Alkohole B werden vorzugsweise in einem Gewichtsverhältnis von 10 : 1 bis 2 : 1 eingesetzt, Alkohol A und der fakultative Alkohol C in einem Gewichtsverhältnis von 50 : 1 bis 2:1 und/oder Alkohol B und der fakultative Alkohol C in einem Gewichtsverhältnis von 2 : 1 bis 0,5 : 1.

Die eingesetzten Isocyanate A, Isocyanate B und/oder Isocyanate C sind, gleich oder verschieden, Diisocyanate; wie z.B.
- Diisocyanate eines aromatischen Kohlenwasserstoffs mit 6 bis 15 Kohlenstoffatomen,
- Diisocyanate eines aliphatischen Kohlenwasserstoffs mit 4 bis 15 Kohlenstoffatomen, und/oder
- Diisocyanate eines cycloaliphatischen Kohlenwasserstoffs mit 6 bis 15 Kohlenstoffatomen .

Vorzugsweise werden als Isocyanate A Diisocyanate eines cycloaliphatischen Kohlenwasserstoffs mit 6 bis 15 Kohlenstoffatomen eingesetzt.
Die Umsetzung der Alkohole A bis C jeweils mit den Isocyanaten A bis C erfolgt vorzugsweise in Gegenwart eines Metall-Katalysators, wobei zinn-, titan-, wolfram- oder bismuth-haltige Katalysatoren bzw. deren Mischungen bevorzugt sind. Genannt seien exemplarisch Dibutylzinndilaurat, Dibutylzinnsäure und/oder Dibutylzinnoxid. Vorzugsweise wird der Katalysator bzw. die Katalysator-Mischung nur in Schritt A zugesetzt.

Die Zusammensetzungen A, B oder C können 10 bis 70 Gew.-% Lösungsmittel enthalten. Als Lösungsmittel seien genannt Methoxyhexanon, Methylethylketon, Methylisobutylketon, Aceton oder eine Mischung davon, vorzugsweise Methylethylketon und/oder Aceton, insbesondere Methylethylketon.

Vorzugsweise wird das Polyurethan aufgebaut, in dem 60 bis 90 %, insbesondere 75 bis 85 %, der C-Atome aus der Umsetzung in Stufe A resultieren, 5 bis 15 %, insbesondere 8 bis 12 %, der C-Atome aus der Umsetzung in Stufe B und 0 bis 15 %, insbesondere 0 bis 10 %, aus der Umsetzung in Stufe C resultieren.

Der Aminoalkohol ist eine Amin- Verbindung mit mindestens einer primären oder sekundären Aminogruppe und mindestens einer primären oder sekundären Hydroxylgruppe, die vorzugsweise ein mittleres Molekulargewicht von 70 bis 500 g/mol besitzt, wobei der Aminoalkohol insbesondere Diethanolamin oder Monoethanolamin ist.

Die Umsetzung Alkohol / Isocyanat erfolgt in den Schritten A, B und C jeweils unabhängig voneinander bei Reaktionstemperaturen von 30 bis 140 °C, vorzugsweise bei 60 bis 90 °C, insbesondere bei 60 bis 80 °C.

Das Neutralisierungsmittel in Schritt E ist insbesondere ein Amin, KOH und/oder NaOH, vorzugsweise ein Amin. Das Amin ist besonders bevorzugt ein tertiäres oder sekundäres Amin oder eine Mischung davon, bevorzugter N,N-Dimethylethanolamin, N-Methyldiethanolamin, Triethanolamin, N,N-Dimethylisopropanoiamin, N-Methyldiisopropanolamin, N-Methylmorpholin, N-Ethylmorpholin, Triethylamin oder eine Mischung davon, insbesondere N,N-Dimethylethanolamin. Der Neutralisationsgrad kann 60% bis 120% betragen.

Das Dispergieren gemäß Schritt E wird insbesondere bei 5 bis 40 °C durchgeführt, wobei das Polymer in Wasser aufgenommen wird oder Wasser zum Polymer hinzugegeben wird, wobei (jeweils) auf den Einsatz von Emulgatoren verzichtet werden kann.

Typisch werden Dispersionen von Polyurethanteilchen mit mittleren Durchmessern von 10 bis 70 nm, vorzugsweise 15 bis 50 nm, bevorzugter 18 bis 40 nm, am meisten bevorzugt 18 bis 35 nm erhalten. Die Feststoffgehalte der Polyurethandispersionen weisen insbesondere einen Feststoffgehalt von 30 bis 55 Gew.%, vorzugsweise von 32 bis 40 Gew.-% auf, bestimmt nach DIN EN ISO 3251. Die Polyurethandispersionen können weiter durch eine Viskosität bei 20 °C von 30 bis 600 mPas nach DIN ISO 976 und unabhängig hiervon durch einen pH-Wert bei 20 °C von 7,0 bis 9,5, vorzugsweise 7,0 bis 9,0, gekennzeichnet sein. Der Polyurethandispersion können weiterhin Polyacrylate zugesetzt sein, vorzugsweise erhältlich durch Zumischen einer wässrigen Polyacrylat-Dispersion oder durch nachträgliche Pfropfung von geeigneten Acryl-Monomeren zum Erhalt einer bei 25°C bis 40°C lagerstabilen Polymerdispersion.

Die erfindungsgemäßen Polyurethandispersionen bzw. obige Polymerdispersionen können in wässrigen Beschichtungsmitteln, insbesondere in wässrigen 2-Komponenten-Beschichtungsmitteln oder wässrigen 1-Komponenten-Beschichtungsmitteln, wie zum Beispiel wässrigen Einbrennlacken und - beschichtungen eingesetzt werden. Die erfindungsgemäßen Polyurethandispersionen bzw. obige Polymerdispersionen zeichnen sich insbesondere durch gute Haftung auf Metall, Keramik, Kunststoffen und Glas aus. Es können für die 1 K- Beschichtungsmittel als auch für die 2-K- Beschichtungsmittel Klarlacke als auch pigmentierte Lacke mit Glanzgraden von seidenmatt bis hochglänzend formuliert werden, d.h. es werden Glanzgrade zwischen 30 und 98% bei einem Winkel von 20° erzielt.

### Beispiele

NCO-Gehaltsbestimmung erfolgt durch indirekte Titration nach DIN 53185.

Beispiel 1: Herstellung einer erfindungsgemäßen Polyurethandispersion: 228,50 g (0,456 Äquivalente) PPG 1000 (Polypropylenglykol mit einer mittleren Molmasse von 1000 g/mol), 0,01 g Dibutylzinndilaurat, 101,20 g Methylethylketon, 2,10 g Irgafos 126 (Antioxidans der BASF SE) und 2,10 g Irganox 245 (Antioxidans der BASF SE) wurden in einen Reaktor gegeben und gerührt. Anschließend wurde Stickstoff eingeleitet und der Reaktor auf 65 °C geheizt. 123,70 g (0,944 Äquivalente) 4,4'-Diisocyanatodicyclohexylmethan wurden über einen Zeitraum von 20 min über einen Tropftrichter zugegeben. Es wurde nun gehalten, bis der Isocyanat-Gehalt 4,6 - 4,8 Gew.% betrug (bezogen auf die Einwaage der Rohstoffe). Dann wurden 48,50 g (0,724 Äquivalente) Dimethylolpropionsäure über Mannloch und danach 97,10 g (0,741 Äquivalente) 4,4'-Diisocyanatodicyclohexylmethan über Tropftrichter in 5 min dazugegeben. Nach Zugabe von 220,00 g Methylethylketon wurde auf 80 °C erwärmt und gehalten, bis der Isocyanat-Gehalt 3,5 bis 3,7 Gew.% betrug. Dann wurde wieder auf 65 °C abgekühlt und es wurden 60,00 g (1,350 Äquivalente) Trimethylolpropan über Mannloch und danach 100,60 g (0,770 Äquivalente) 4,4'-Diisocyanatodicyclohexylmethan über Tropftrichter in 5 min dazugeben. Es wurde auf 80 °C erwärmt und gehalten, bis der Isocyanat-Gehalt weniger als 2 Gew.% betrug. Dann wurde auf 65 °C gekühlt und über einen Tropftrichter wurden 49,00 g (0,464 Äquivalente) Diethanolamin dazugegeben. Anschließend wurde 30 min bei 65 °C gerührt, wonach der Isocyanat-Gehalt kleiner als 0,1 Gew.% war. Danach wurde die Präpolymerlösung über einen Zeitraum von 15 bis 20 min unter Kühlung in eine sich in einem Dispergiergefäß befindliche Lösung von 33,00 g N,N-Dimethylethanolamin in 1252,50 g destilliertem Wasser dispergiert. Es wurden 2,00 g Mergal K9N (Konservierungsmittel, Hersteller Troy Chemie) zugegeben und 30 min nachgerührt. Nach Fertigstellung der Dispersion wurde Methylethylketon im Vakuum bis auf einen Restgehalt von weniger als 0,5 Gew.% abdestilliert und ein Feststoffgehalt von 35 Gew.% erhalten. Die sich ergebende Dispersion wurde anschließend über ein 100 µm-Sieb gegeben. Sie enthielt keine Rückstände und war mit einer mittleren Teilchengröße von 19 nm feinteilig und transparent. Ferner besaß sie eine Viskosität bei 20 °C von 570 mPas sowie einen pH-Wert bei 20 °C von 8,8. Es wurde ein klarer Film nach Trocknung über 24h bei 23°C im Klimaraum (bei 80% Luftfeuchtigkeit) erhalten. Die Pendeldämpfung des Films auf Glas gemäß König nach DIN 53157 betrug 76 s.

Beispiel 2: Hierbei wird anstelle PPG 1000_das Polycapronlactondiol Capa 2100 mit einem durchschnittlichen Mn von 1000 des Herstellers Perstorp eingesetzt. Der Herstellprozess bleibt wie in Beispiel 1 beschrieben. Die so hergestellte Dispersion besaß eine mittlere Teilchengröße von 20 nm, einen Festkörpergehalt von 34,7 Gew.%, eine Viskosität bei 20°C von 85 mPas und einen pH-Wert bei 20°C von 8,1. Es wurde ein klarer Film nach Trocknung über 24h bei 23°C im Klimaraum (bei 80% Luftfeuchtigkeit) erhalten. Die Pendeldämpfung des Films auf Glas gemäß König nach DIN 53157 betrug 100 s.

Beispiel 3: Hierbei wird anstelle PPG 1000_das Dimerdiol priplast 3162 mit einem durchschnittlichen Mn von 1000 des Herstellers Croda eingesetzt. Der Herstellprozess bleibt wie in Beispiel 1 beschrieben. Die so hergestellte Dispersion besaß eine mittlere Teilchengröße von 28 nm, einen Festkörpergehalt von 34,5 Gew.%, eine Viskosität bei 20°C von 37 mPas und einen pH-Wert bei 20°C von 8,3. Es wurde ein klarer Film nach Trocknung über 24h bei 23°C im Klimaraum (bei 80% Luftfeuchtigkeit) erhalten. Die Pendeldämpfung des Films auf Glas gemäß König nach DIN 53157 betrug 65 s.

### Vergleichsbeispiel: Herstellung einer Vergleichs-Polyurethandispersion (nicht er-findungsgemäß):

228,50 g (0,456 Äquivalente) PPG 1000, 48,50 g (0,724 Äquivalente) Dimethylolpropionsäure, 60,00 g (1,350 Äquivalente) Trimethylolpropan, 0,01 g Dibutylzinndilaurat, 212,00 g Methylethylketon, 2,10 g Irgafos 126 und 2,10 g Irgafos 245 wurden in einen Reaktor gegeben und gerührt. Anschließend wurde Stickstoff eingeleitet und der Reaktor auf 65 °C geheizt. 321,40 g (2,450 Äquivalente) 4,4'-Diisocyanatodicyclohexylmethan wurden über einen Zeitraum von 20 min über einen Tropftrichter zugegeben. Danach wurde mit 100,00 g Methylethylketon nachgespült. Es wurde nun bei 65 °C gehalten, bis der Isocyanat-Gehalt 2,2 - 2,3 Gew.% betrug. Dann wurden 49,00 g (0,464 Äquivalente) Diethanolamin über einen Tropftrichter über einen Zeitraum von 10 min dazugegeben und 30 min gerührt, wonach der Isocyanat-Gehalt kleiner als 0,1 Gew.% war. Danach wurde die Präpolymerlösung über einen Zeitraum von 15 bis 20 min unter Kühlung in eine sich in einem Dispergiergefäß befindliche Lösung von 33,00 g N,N-Dimethylethanolamin in 1252,50 g destilliertem Wasser dispergiert, wobei zum Ende der Dispergierung ein starker Anstieg der Viskosität zu beobachten war. Die sich ergebende sehr hochviskose, transparente Dispersion war nicht mehr rührfähig. Daher wurde auf das geplante Abdestillieren von Methylethylketon im Vakuum, bis der Feststoffgehalt der Dispersion 35 Gew.-% betrug, und auf eine anschließende Zugabe von Konservierungsmittel verzichtet.

## Patentansprüche

1. Verfahren zur Herstellung einer wässrigen Polyurethandispersion, umfassend die Schritte
Schritt A
- Bereitstellen einer Zusammensetzung A mit einem NCO / OH+NH - Verhältnis von größer 1,1 : 1 bis 2,5 : 1, umfassend:
zumindest einen Alkohol A mit mindestens zwei Hydroxylgruppen und einem mittleren Molekulargewicht von 500 bis 5000 g/mol und
zumindest ein Isocyanat A, aufweisend zumindest zwei Isocyanatgruppen,
- Umsetzen der Hydroxylgruppen, zumindest des Alkohols/der Alkohole A mit den Isocyanatgruppen, zumindest des Isocyanats A unter Bildung eines isocyanat-terminierten Präpolymers A,
Schritt B
- Bereitstellen einer Zusammensetzung B mit einem NCO / OH+NH - Verhältnis 1,1:1 bis 1,8:1, wobei das NCO / OH+NH -Verhältnis der Zusammensetzung B kleiner ist als das NCO / OH+NH -Verhältnis der Zusammensetzung A, und die Zusammensetzung B umfaßt:
das isocyanat-terminierte Präpolymer A, zumindest einen Alkohol B, unterschiedlich von Alkohol A, mit mindestens zwei Hydroxylgruppen und entweder mit mindestens einer Carboxylgruppe oder mindestens einer Sulfonsäuregruppe oder deren Salzen, und
zumindest ein Isocyanat B mit zumindest zwei Isocyanatgruppen,
- Umsetzen der Hydroxylgruppen, zumindest des Alkohols/der Alkohole B mit den Isocyanatgruppen, zumindest des Isocyanates B und des Präpolymers A, unter Erhalt zumindest 90% der Carboxyl- und/oder SulfonsäureGruppen oder deren Salzen und unter Bildung eines isocyanat-terminierten Präpolymers B,
fakultativer Schritt C
- Bereitstellen einer Zusammensetzung C, aufweisend ein NCO / OH+NH - Verhältnis von 1,1:1 bis 1,5:1, wobei das NCO / OH+NH - Verhältnis der Zusammensetzung C kleiner ist als das NCO / OH+NH -Verhältnis der Zusammensetzung A, und die Zusammensetzung C umfaßt:
das isocyanat-terminierte Präpolymer B,
zumindest einen Alkohol C mit zwei und mehr Hydroxylgruppen, unterschiedlich von Alkohol A und B, und mit einem mittleren Molekulargewicht von 92 bis 500 g/mol und
zumindest ein Isocyanat C mit zumindest zwei Isocyanatgruppen,
- Umsetzen der Hydroxylgruppen, zumindest des Alkohols C mit den Isocyanatgruppen, zumindest des Isocyanats C und des Präpolymers B, unter Erhalt zumindest 90% der Carboxyl- und/oder Sulfonsäure-Gruppen oder deren Salzen unter Bildung eines isocyanat-terminierten Präpolymers C,
Schritt D Umsetzen des isocyanat-terminierten Präpolymers C oder-wenn Schritt C nicht durchgeführt wurde - des isocyanat-terminierten Präpolymers B mit einem Aminoalkohol, wodurch sich ein hydroxyl-terminiertes, carboxylgruppen- und/oder sulfonsäure-gruppen-haltiges Polyurethan mit einer Hydroxylzahl von 20 bis 200 und einer Säurezahl von 10 bis 50 ergibt, bezogen auf das lösungsmittelfreie Polyurethan,
Schritt E Neutralisation des Polyurethans und Dispergieren in Wasser, wodurch sich die wässrige Polyurethandispersion ergibt, wobei die Bestimmung der Säurezahl nach DIN EN ISO 2114 und die der Hydroxylzahl nach DIN 53240 erfolgt.

2. Verfahren nach Anspruch 1, wobei als Neutralisierungsmittel in Schritt E ein Amin, KOH und/oder NaOH eingesetzt wird, vorzugsweise mit einem Neutralisationsgrad von 60% bis 120%.

3. Verfahren nach Anspruch 1, wobei unabhängig voneinander das Isocyanat A, Isocyanat B und/oder Isocyanat C gleich oder verschieden,
- ein Diisocyanat eines aliphatischen Kohlenwasserstoffs mit 4 bis 15 Kohlenstoffatomen,
- ein Diisocyanat eines cycloaliphatischen Kohlenwasserstoffs mit 6 bis 15 Kohlenstoffatomen und/oder
- ein Diisocyanat eines aromatischen Kohlenwasserstoffs mit 6 bis 15 Kohlenstoffatomen,
ist.

4. Verfahren nach Anspruch 1, wobei das Polyurethan in der wässrigen Polyurethandispersion wie folgt aufgebaut wird:
60-90 % der C-Atome in Stufe A, insbesondere 75-85 %,
5 - 15 % der C-Atome in Stufe B, insbesondere 8 bis 12 % und
0 -15 % der C-Atome in Stufe C, insbesondere 0-10 %.

5. Verfahren nach Anspruch 1, wobei die Umsetzungen der Schritte A, B und/oder C unabhängig voneinander in Abwesenheit eines Lösungsmittels oder in Gegenwart eines Lösungsmittels erfolgen, insbesondere Methoxyhexanon, Methylethylketon, Methylisobutylketon, Aceton oder eine Mischung davon, vorzugsweise Methylethylketon und/oder Aceton.

6. Verfahren nach einem der vorhergehenden Ansprüche, wobei Alkohol A eine mittlere OH-Funktionalität von 1,9 bis 3, vorzugsweise 1,9 bis 2,3, aufweist.

7. Verfahren nach einem der vorhergehenden Ansprüche, wobei der Alkohol A ein Polyetherpolyol, Polyesterpolyol, Polycarbonatdiol, Polyacrylatpolyol, Polyhydroxylolefin, Polycaprolactondiol oder eine Mischung davon ist und der Alkohol A vorzugsweise ein mittleres Molekulargewicht von 500 bis 2000 g/mol aufweist.

8. Verfahren nach einem der vorhergehenden Ansprüche, bei dem der Alkohol B eine Verbindung ist, die mindestens zwei Hydroxyl- und eine Carboxylgruppe enthält, und vorzugsweise Dimethylolpropionsäure ist.

9. Verfahren nach einem der vorhergehenden Ansprüche, bei dem der Alkohol C ein Alkohol ist, der zusammen mindestens 2 primäre oder sekundäre Hydroxylgruppen pro Molekül enthält, wobei vorzugsweise mindestens 30%, vorzugsweise mindestens 50%, besonders bevorzugt mindestens 80%, der Alkohole C pro Molekül 3 und mehr Hydroxylgruppen aufweisen.

10. Verfahren nach einem der vorhergehenden Ansprüche, wobei unabhängig voneinander:
Alkohol A und Alkohol B in einem Gewichtsverhältnis von 10 1 bis 2 : 1; und/oder fakultativ Alkohol A und der Alkohol C in einem Gewichtsverhältnis von 50 : 1 bis 2:1; und/oder
fakultativ Alkohol B und der Alkohol C in einem Gewichtsverhältnis von 2 : 1 bis 0,5 : 1 eingesetzt werden.

11. Verfahren nach einem der vorhergehenden Ansprüche, wobei die Zusammensetzungen A, B oder C 10 bis 70 Gew.-% Lösungsmittel enthalten.

12. Verfahren nach einem der vorhergehenden Ansprüche, bei dem die Umsetzungen in Schritt A, B und/oder C in Anwesenheit oder Abwesenheit eines Katalysators erfolgen, vorzugsweise in Anwesenheit eines Katalysators, wobei der Katalysator zinnhaltig ist.

13. Verfahren nach einem der vorhergehenden Ansprüche, wobei
a) die Umsetzungen der Schritten A, B und C jeweils unabhängig voneinander bei 30 bis 140 °C durchgeführt werden, vorzugsweise bei 60 bis 90 °C, insbesondere bei 65 bis 80 °C und/oder
b) die Umsetzungen nach Schritt E bei 5 bis 40 °C durchgeführt werden.

14. Verfahren nach einem der vorhergehenden Ansprüche, bei dem der Aminoalkohol eine Verbindung mit mindestens einer primären oder sekundären Aminogruppe und mindestens einer primären oder sekundären Hydroxylgruppe ist, die vorzugsweise ein mittleres Molekulargewicht von 70 bis 500 g/mol besitzt, wobei der Aminoalkohol insbesondere Diethanolamin ist.

15. Verfahren nach einem der vorhergehenden Ansprüche, wobei das Neutralisierungsmittel ein Amin ist und das Amin vorzugsweise ein tertiäres oder sekundäres Amin oder eine Mischung davon ist, besonders bevorzugt N,N-Dimethylethanolamin, N-Methyldiethanolamin, Triethanolamin, N,N-Dimethylisopropanolamin, N-Methyldiisopropanolamin, N-Methylmorpholin, N-Ethylmorpholin, Triethylamin oder eine Mischung davon.

16. Verfahren nach einem der vorhergehenden Ansprüche, wobei die Polyurethandispersion unabhängig voneinander durch eines oder mehrere der folgenden Merkmale genkennzeichnet ist:
a) die Polyurethandispersion weist Polyurethanteilchen eines mittleren Durchmesser von 10 bis 70 nm, vorzugsweise 15 bis 50 nm, bevorzugter 18 bis 40 nm, am meisten bevorzugt 18 bis 35 nm auf;
b) Polyurethandispersion weist einen Feststoffgehalt von 30 bis 55 Gew.%, vorzugsweise von 32 bis 40 Gew.-% auf, bestimmt nach DIN EN ISO 3251;
c) die Polyurethandispersion weist eine Viskosität bei 20°C von 30 bis 600 mPas nach DIN ISO 976 auf,
d) die Polyurethandispersion enthält weiterhin Polyacrylate;
e) die Polyurethandispersion weist einen pH-Wert bei 20°C von 7,0 bis 9,5, insbesondere von 7,0 bis 9,0 auf.

17. Verfahren nach einem der vorhergehenden Ansprüche, wobei das hydroxylterminierte, carboxylgruppen- und/oder sulfonsäure-gruppen-haltige Polyurethan eine Hydroxylzahl von 20 bis 200, vorzugsweise 50 bis 150, und eine Säurezahl von 10 bis 35 aufweist.

18. Verfahren nach einem der vorhergehenden Ansprüche, wobei 0 bis zu 20 % der Hydroxylgruppen des Alkohols/derAlkohole A, des Alkohols/derAlkohole B und/oder des Alkohols/derAlkohole C durch primäre oder sekundäre Amingruppen ersetzt sind,

19. Wässrige Polyurethandispersion erhältlich nach einem Verfahren gemäß einem der Ansprüche 1 bis 18.

20. Verwendung der Polyurethandispersion gemäß Anspruch 19 in wässrigen Beschichtungsmitteln,
- insbesondere in wässrigen 2-Komponenten-Beschichtungsmitteln enthaltend weiterhin ein oder mehrere Polyisocanate, oder
- insbesondere in wässrigen 1-Komponenten-Beschichtungsmittel, nämlich in wässrigen Einbrennlacken und -beschichtungen.

## Claims

1. Process for production of an aqueous polyurethane dispersion comprising the steps
Step A
- providing a composition A, having a NCO / OH + NH ratio greater than 1.1:1 to 2.5:1, comprising:
at least one alcohol A, having at least two hydroxyl groups and an average molecular weight of 500 to 5000 g/mol and at least one isocyanate A, having at least two isocyanate groups,
- converting the hydroxyl groups, at least of the alcohol / alcohols A with the isocyanate groups, at least of the isocyanate A under formation of an isocyanate-terminated prepolymer A,
Step B
- providing a composition B, having a NCO / OH + NH ratio of 1.1:1 to 1.8:1, wherein the NCO / OH + NH ratio of composition B is less than the NCO / OH + NH ratio of composition A, and composition B comprising:
the isocyanate-terminated prepolymer A, at least one alcohol B, different from alcohol A, with at least two hydroxyl groups and having at least either one carboxyl group or at least one sulfonic acid group or salts thereof, and at least one isocyanate B with at least two isocyanate groups,
- converting the hydroxyl groups, at least of the alcohol / alcohols B with the isocyanate groups, at least of the isocyanate B and the prepolymer A by retaining at least 90% of the carboxyl groups and / or sulfonic acid groups or their salts, and under formation of an isocyanate-terminated prepolymer B, optional Step C
- providing a composition C comprising a NCO / OH + NH ratio of 1.1:1 to 1.5:1,
- wherein the NCO / OH + NH - ratio of the composition C is less than the NCO / OH + NH ratio of composition A, composition C comprising:
the isocyanate-terminated prepolymer B,
at least one alcohol C with two or more hydroxyl groups, different from alcohol A and B, and having an average molecular weight of 92 to 500 g/mol and
at least one isocyanate C with at least two isocyanate groups,
- converting the hydroxyl groups, at least of alcohol C with the isocyanate groups, at least of the isocyanate C and the prepolymer B by retaining at least 90% of the carboxyl and / or sulfonic acid groups or their salts thereof under formation of an isocyanate-terminated prepolymer C,
Step D converting the isocyanate-terminated prepolymer C or - in case Step C was not carried out - of the isocyanate-terminated prepolymer B with an amino alcohol, which results in a hydroxyl-terminated polyurethane, containing carboxyl groups and / or sulfonic acid groups, having a hydroxyl number from 20 to 200 and an acid number from 10 to 50, based on the solvent-free polyurethane,
Step E neutralization of the polyurethane and dispersing in water, resulting in the aqueous polyurethane dispersion, wherein the determination of the acid number is carried out according to DIN EN ISO 2114 and the hydroxyl number according to DIN 53240.

2. Process according to Claim 1, wherein in Step E an amine is used as neutralizing agent, KOH and / or NaOH, preferably with a degree of neutralization of 60% to 120%.

3. Process according to Claim 1, wherein the isocyanate A, isocyanate B and/or isocyanate C, independently from each other, are equal or different,
- one diisocyanate of an aliphatic hydrocarbon, having 4 to 15 carbon atoms,
- one diisocyanate of a cycloaliphatic hydrocarbon, having 6 to 15 carbon atoms and / or
- one diisocyanate of an aromatic hydrocarbon, having 6 to 15 carbon atoms.

4. Process according to Claim 1, wherein the polyurethane is built up in the aqueous polyurethane dispersion as follows:
60 to 90% of the C-atoms in Stage A, particularly 75 - 85%,
5 - 15% of the C-atoms in Stage B, particularly 8 to 12%, and
0 - 15 % of the C-atoms in Stage C, particularly 0 - 10%.

5. Process according to Claim 1, wherein the converting of Steps A, B and / or C occur independently from each other, in the absence or presence of a solvent, particularly methoxyhexanone, methyl ethyl ketone, methyl isobutyl ketone, acetone or a mixture thereof, preferably methyl ethyl ketone and / or acetone.

6. Process according to one of the preceding Claims, wherein alcohol A has an average OH-functionality from 1.9 to 3 preferably 1.9 to 2.3.

7. Process according to one of the preceding Claims, wherein alcohol A is a polyether polyol, polyester polyol, polycarbonate diol, polyacrylate polyol, polyhydroxylolefin, polycaprolactone diol or a mixture thereof and alcohol A preferably having an average molecular weight of 500 to 2000 g/mol.

8. Process according to one of the preceding Claims, wherein alcohol B is a compound comprising at least two hydroxyl groups and one carboxyl group, and is preferably dimethylol propionic acid.

9. Process according to one of the preceding Claims, wherein alcohol C is an alcohol, combined having at least 2 primary or secondary hydroxyl groups per molecule, wherein preferably at least 30%, preferably at least 50%, particularly preferably at least 80% of the alcohols C have 3 and more hydroxyl groups per molecule.

10. Process according to one of the preceding Claims, wherein independently of each other:
alcohol A and alcohol B are used in a weight ratio of 10:1 to 2:1 and / or
optionally alcohol A and alcohol C are used in a weight ratio of 50:1 to 2:1 and / or
optionally alcohol B and alcohol C are used in a weight ratio of 2:1 to 0.5:1.

11. Process according to one of the preceding Claims, wherein the compositions A, B or C contain 10 to 70 wt% of a solvent.

12. Process according to one of the preceding Claims, in which the conversions of Step A, B and / or C are carried out in the presence or absence of a catalyst, preferably in the presence of a catalyst, whereby the catalyst contains is stannous.

13. Process according to one of the preceding Claims, wherein
a) the converting of Steps A, B and C are carried out independently of each other at 30 to 140°C, preferably at 60 to 90°C, particularly at 65 to 80°C and / or
b) the converting according to Step E are carried out at 5 to 40°C.

14. Process according to one of the preceding Claims, wherein the amino alcohol is a compound, having at least one primary or secondary amino group and at least one primary or secondary hydroxyl group, which preferably has an average molecular weight of 70 to 500 g/mol, wherein the amino alcohol is particularly diethanolamine.

15. Process according to one of the preceding Claims, wherein the neutralizing agent is an amine and the amine is preferably a tertiary or secondary amine or a mixture thereof, particularly preferably N,N-dimethylethanolamine, N-methyl diethanolamine, triethanolamine, N,N-dimethylisopropanolamine, N-methyl diisopropanolamine, N-methyl morpholine, N-ethylmorpholine, triethylamine or a mixture thereof.

16. Process according to one of the preceding Claims, wherein the polyurethane dispersion, independently of each other, is **characterized by** one or more of the following features:
a) the polyurethane dispersion having polyurethane particles, having an average diameter of 10 to 70 nm, preferably 15 to 50 nm, more preferably 18 to 40 nm, most preferably 18 to 35 nm;
b) the polyurethane dispersion having a solid content of 30 to 55 wt%, preferably 32 to 40 wt%, determined according to DIN EN ISO 3251;
c) the polyurethane dispersion having a viscosity from 30 to 600 mPas at 20°C, according to DIN ISO 976;
d) the polyurethane dispersion comprising further polyacrylates;
e) the polyurethane dispersion having a pH-value from 7.0 to 9.5 at 20°C, particularly from 7.0 to 9.0.

17. Process according to one of the preceding Claims, wherein the hydroxyl-terminated polyurethane comprising carboxyl groups and / or sulfonic acid group, has a hydroxyl number of 20 to 200, preferably 50 to 150, and an acid number from 10 to 35.

18. Process according to one of the preceding Claims, wherein 0 to 20% of the hydroxyl groups of the alcohol / alcohols A, the alcohol / alcohols B and the alcohol / alcohols C are replaced by primary or secondary amine groups.

19. Aqueous polyurethane dispersion obtainable by a process according to one of the Claims 1 to 18.

20. Use of the polyurethane dispersion according to Claim 19, in aqueous coating agents,
- particularly in aqueous 2-component coating agents, further comprising one or more polyisocyanates, or
- particularly in aqueous 1-component coating agents, namely in aqueous stoving enamels and burn-in coatings.

## Revendications

1. Procédé de fabrication d'une dispersion aqueuse de polyuréthane, comprenant les étapes :
Etape A :
- préparation d'une composition A ayant un rapport NCO/OH+NH- de plus de 1,1:1 à 2,5:1, comprenant :
au moins un alcool A ayant au moins deux groupes hydroxyle et une masse moléculaire moyenne de 500 à 5000 g/mol et
au moins un isocyanate A, présentant au moins deux groupes isocyanate,
- réaction des groupes hydroxyle, au moins de l'alcool/des alcools A avec les groupes isocyanate, au moins de l'isocyanate A, avec formation d'un prépolymère A terminé par isocyanate,
Etape B :
- préparation d'une composition B ayant un rapport NCO/OH+NH- de 1,1:1 à 1,8:1, le rapport NCO/OH+NH- de la composition B étant inférieur au rapport NCO/OH+NH- de la composition A, et la composition B comprenant :
le prépolymère A terminé par isocyanate, au moins un alcool B, différent de l'alcool A, ayant au moins deux groupes hydroxyle et ayant soit au moins un groupe carboxyle soit au moins un groupe acide sulfonique ou leurs sels, et
au moins un isocyanate B ayant au moins deux groupes isocyanate,
- réaction des groupes hydroxyle, au moins de l'alcool/des alcools B avec les groupes isocyanate, au moins de l'isocyanate B et du prépolymère A, avec maintien d'au moins 90 % des groupes carboxyle et/ou acide sulfonique ou de leurs sels et avec formation d'un prépolymère B terminé par isocyanate,
Etape facultative C :
- préparation d'une composition C, présentant un rapport NCO/OH+NH- de 1,1:1 à 1,5:1, le rapport NCO/OH+NH- de la composition C étant inférieur au rapport NCO/OH+NH- de la composition A, et la composition C comprenant :
le prépolymère B terminé par isocyanate,
au moins un alcool C ayant au moins deux groupes hydroxyle, différent de l'alcool A et de l'alcool B, et ayant une masse moléculaire moyenne de 92 à 500g/mol et au moins un isocyanate C ayant au moins deux groupes isocyanate,
- réaction des groupes hydroxyle, au moins de l'alcool C avec les groupes isocyanate, au moins de l'isocyanate C et du prépolymère B, avec maintien d'au moins 90 % des groupes carboxyle et/ou acide sulfonique ou de leurs sels, avec formation d'un prépolymère C terminé par isocyanate,
Etape D :
réaction du prépolymère C terminé par isocyanate ou-lorsque l'étape C n'a pas été effectuée - du prépolymère B terminé par isocyanate avec un aminoalcool, ce par quoi il en résulte un polyuréthane contenant des groupes carboxyle et/ou des groupes acide sulfonique, terminé par hydroxyle, ayant un indice d'hydroxyle de 20 à 200 et un indice d'acide de 10 à 50, par rapport au polyuréthane sans solvant,
Etape E :
neutralisation du polyuréthane et dispersion dans l'eau, ce par quoi il en résulte la dispersion aqueuse de polyuréthane, la détermination de l'indice d'acide s'effectuant selon DIN EN ISO 2114, et celle de l'indice d'hydroxyle, selon DIN 53240.

2. Procédé selon la revendication 1, dans lequel, en tant qu'agent de neutralisation dans l'étape E, on utilise une amine, KOH et/ou NaOH, de préférence ayant un degré de neutralisation de 60 % à 120 %.

3. Procédé selon la revendication 1, dans lequel, indépendamment les uns des autres, l'isocyanate A, l'isocyanate et/ou l'isocyanate C sont :
- un diisocyanate d'un hydrocarbure aliphatique ayant de 4 à 15 atomes de carbone,
- un diisocyanate d'un hydrocarbure cycloaliphatique ayant de 6 à 15 atomes de carbone et/ou
- un diisocyanate d'un hydrocarbure aromatique ayant de 6 à 15 atomes de carbone,
identiques ou différents.

4. Procédé selon la revendication 1, dans lequel le polyuréthane dans la dispersion aqueuse de polyuréthane est constitué comme suit :
60-90 % des atomes de C dans l'étape A, en particulier 75-85 %,
5-15 % des atomes de C dans l'étape B , en particulier 8 à 12 % et
0-15 % des atomes de C dans l'étape C, en particulier 0-10 %.

5. Procédé selon la revendication 1, dans lequel les réactions des étapes A, B et/ou C ont lieu, indépendamment les unes des autres, en l'absence d'un solvant ou en présence d'un solvant, en particulier la méthoxyhexanone, la méthyléthylcétone, la méthylisobutylcétone, l'acétone ou un mélange de celles-ci, de préférence la méthyléthylcétone et/ou l'acétone.

6. Procédé selon l'une des revendications précédentes, dans lequel l'alcool A présente une fonctionnalité OH moyenne de 1,9 à 3, de préférence de 1,9 à 2, 3.

7. Procédé selon l'une des revendications précédentes, dans lequel l'alcool A est un polyétherpolyol, un polyesterpolyol, un polycarbonatediol, un polyacrylatepolyol, une polyhydroxyloléfine, un polycaprolactonediol ou un mélange de ceux-ci, et l'alcool A présente, de préférence, une masse moléculaire moyenne de 500 à 2000 g/mol.

8. Procédé selon l'une des revendications précédentes, dans lequel l'alcool B est un composé qui contient au moins deux groupes hydroxyle et un groupe carboxyle, et, de préférence, est l'acide diméthylolpropionique.

9. Procédé selon l'une des revendications précédentes, dans lequel l'alcool C est un alcool qui contient conjointement au moins 2 groupes hydroxyle primaires ou secondaires par molécule, où, de préférence au moins 30 %, de préférence au moins 50 %, de manière particulièrement préférée au moins 80 %, de l'alcool C par molécule présentent au moins 3 groupes hydroxyle.

10. Procédé selon l'une des revendications précédentes, dans lequel, indépendamment les uns des autres :
l'alcool A et l'alcool B sont utilisés dans un rapport en poids de 10:1 à 2:1 ; et/ou
facultativement, l'alcool A et l'alcool C sont utilisés dans un rapport en poids de 50:1 à 2:1 ; et/ou
facultativement l'alcool B et l'alcool C sont utilisés dans un rapport en poids de 2:1 à 0,5:1.

11. Procédé selon l'une des revendications précédentes, dans lequel les compositions A, B ou C contiennent de 10 à 70 % en poids de solvant.

12. Procédé selon l'une des revendications précédentes, dans lequel les réactions dans l'étape A, B et/ou C ont lieu en présence ou en l'absence d'un catalyseur, de préférence en présence d'un catalyseur, le catalyseur contenant de l'étain.

13. Procédé selon l'une des revendications précédentes, dans lequel :
a) les réactions des étapes A, B et C, chacune indépendamment des autres, sont conduites à 30 à 140°C, de préférence à 60 à 90°C, en particulier à 65 à 80°C et/ou
b) les réactions selon l'étape E sont conduites à 5 à 40°C.

14. Procédé selon l'une des revendications précédentes, dans lequel l'aminoalcool est un composé ayant au moins un groupe amino primaire ou secondaire et au moins un groupe hydroxyle primaire ou secondaire, qui possède, de préférence, une masse moléculaire moyenne de 70 à 500 g/mol, l'aminoalcool étant, en particulier, la diéthanolamine.

15. Procédé selon l'une des revendications précédentes, dans lequel l'agent de neutralisation est une amine et l'amine est, de préférence, une amine tertiaire ou secondaire ou un mélange de celles-ci, de manière davantage préférée la N,N-diméthyléthanolamine, la N-méthyldiéthanolamine, la triéthanolamine, la N,N-diméthylisopropanolamine, la N-méthyldiisopropanolamine, la N-méthylmorpholine, la N-éthylmorpholine, la triéthylamine ou un mélange de celles-ci.

16. Procédé selon l'une des revendications précédentes, dans lequel la dispersion de polyuréthane est **caractérisée par** une ou plusieurs des caractéristiques suivantes, indépendamment les unes des autres :
a) la dispersion de polyuréthane présente des particules de polyuréthane d'un diamètre moyen de 10 à 70 nm, de préférence de 15 à 50 nm, de manière davantage préférée de 18 à 40 nm, de la manière que l'on préfère le plus de 18 à 35 nm ;
b) la dispersion de polyuréthane présente une teneur en matières solides de 30 à 55 % en poids, de préférence de 32 à 40 % en poids, déterminée selon DIN EN ISO 3251 ;
c) la dispersion de polyuréthane présente une viscosité à 20°C de 30 à 600 mPas selon DIN ISO 976 ;
d) la dispersion de polyuréthane contient en outre des polyacrylates ;
e) la dispersion de polyuréthane présente une valeur de pH à 20°C de 7,0 à 9,5, en particulier de 7,0 à 9,0.

17. Procédé selon l'une des revendications précédentes, dans lequel le polyuréthane contenant des groupes carboxyle et/ou des groupes acide sulfonique, terminé par hydroxyle, présente un indice d'hydroxyle de 20 à 200, de préférence de 50 à 150, et un indice d'acide de 10 à 35.

18. Procédé selon l'une des revendications précédentes, dans lequel 0 à 20 % des groupes hydroxyle de l'alcool/des alcools A, de l'alcool/des alcools B et/ou de l'alcool/des alcools C sont remplacés par des groupes amine primaires ou secondaires.

19. Dispersion aqueuse de polyuréthane susceptible d'être obtenue par un procédé selon l'une des revendications 1 à 18.

20. Utilisation de la dispersion de polyuréthane selon la revendication 19 dans des agents de revêtement aqueux,
- en particulier dans des agents de revêtement aqueux à 2 composants contenant en outre un ou plusieurs polyisocyanates, ou
- en particulier dans des agents de revêtement aqueux à 1 composant, à savoir dans des laques à cuire aqueuses et des émaux au four aqueux.
